Europäisches Patentamt

European Patent Office

Office européen des brevets

(11) Publication number: **0 184 172**
A2

(12) # EUROPEAN PATENT APPLICATION

(21) Application number: **85115251.2**

(22) Date of filing: **02.12.85**

(51) Int. Cl.⁴: **B 60 R 22/42**
**B 60 R 22/24**

(30) Priority: **03.12.84 GB 8430469**

(43) Date of publication of application:
**11.06.86 Bulletin 86/24**

(84) Designated Contracting States:
**DE FR GB**

(71) Applicant: **AUTOLIV DEVELOPMENT AKTIEBOLAG**
**P.O. Box 124**
**S-447 00 Vargarda(SE)**

(72) Inventor: **Andersson, Sture Roland**
**Ekorrvagen 16**
**S-131 42 Nacka(SE)**

(74) Representative: **Frankland, Nigel Howard et al,**
**FORRESTER & BOEHMERT Widenmayerstrasse 4/I**
**D-8000 München 22(DE)**

(54) **A seat belt guide assembly.**

(57) A seat belt guide assembly is to be mounted in position on a "B" post of a motor vehicle with the seat belt extending vertically upwardly from the retractor reel, through the guide assembly and downwardly as a diagonal belt. The guide assembly incorporates an eccentric roller about which the seat belt is guided. The roller is provided with a guide defining a slot with at least one upturned end through which the seat belt passes.

FIG 9

EP 0 184 172 A2

A seat belt guide assembly.

THE PRESENT INVENTION relates to a seat belt guide assembly and more particularly the present invention relates to a seat belt guide assembly adapted to be mounted at a position adjacent a shoulder of a person sitting in a motor vehicle (e.g. on the "B" post of a motor vehicle) to guide a seat belt emanating from a retractor reel over the shoulder of a person sitting in the motor vehicle.

When a person is sitting in a front seat of a motor vehicle, wearing a seat belt, and the vehicle is involved in an accident, the person will be thrown forwardly, applying a significant force to the seat belt. If the seat belt is of the type which includes a diagonal portion passing over a guide mounted adjacent the shoulder of the person sitting in the motor vehicle, with the seat belt then passing downwardly to a retractor reel mounted on the floor of the vehicle, when an accident occurs the retractor reel is locked, but the force applied to the belt tends to stretch the belt, and also the force applied to the belt tends to withdraw a certain portion of the belt from the retractor reel, as the part of the belt that is wound on to the spool becomes tightened. Thus it is possible for the person to move forwardly relative to their seat, even though they are restrained by the seat belt. This may prove to be very disadvantageous if the windscreen is very close to the person, since the person can then actually hit the windscreen.

According to one aspect of the present invention there is provided a seat belt guide assembly comprising a support member, means to mount the support member in position on a vehicle, a roller carried by the support member, the roller being eccentric, the arrangement being such that a seat belt may be wrapped partly around the roller with the roller in an initial position with part of the seat belt located between the roller and part of the support member, the roller rotating when a predetermined force is applied to the belt, the eccentric nature of the roller being such that part of the belt is clamped between the roller and the support member when the roller thus rotates.

Preferably the part of the roller that clampingly engages said belt is knurled or roughened.

A seat belt guide assembly of this type may be mounted in position, for example on the "B" post of a motor vehicle. The seat belt may then be passed over the roller. When a normal force is applied to the seat belt to extract the belt from the retractor reel, the belt will slide over the roller, and thus the guide assembly will operate in precisely the same way as the prior art guide assemblies. However, in an accident situation a significant force will be applied to the belt, and this will cause the roller to rotate. The roller will then clamp the belt again the support member. Thus the portion of the belt that is able to stretch is limited, and also the risk of any further portion of belt being withdrawn from the retractor reel is minimised.

The eccentric roller may comprise a cylindrical roller which is mounted for rotation about a pivot pin which is not coincident with the longitudinal axis of the cylindrical roller. Alternatively the roller may have a non circular cross section, the roller rotating about such an axis that the desired clamping effect is achieved.

It has been found that when a seat belt is used, in the manner described above, with a portion of the belt extending vertically up towards a guide assembly of the type described, with a further portion of the belt then proceeding to form a diagonal belt, the belt can slide across the guide and become bunched up at one edge. This is clearly undesirable.

According to a second aspect of this invention there is provided a seat belt guide assembly comprising a support member, means to mount the support member in position on a vehicle, a roller carried by the support member, the roller being eccentric, the arrangement being such that a seat belt may be wrapped partly round the roller with the roller in an initial position with part of the seat belt located between the roller and part of the support member, the roller rotating when a predetermined force is applied to the belt, the eccentric nature of the roller being such that part of the belt is then clamped between the roller and the support member when the roller rotates, wherein a guide for restraining the belt is provided on the roller.

Preferably the guide is such that part of the belt passes through the guide.

Advantageously the guide defines a slot or passage to accommodate the belt, the slot or passage, in cross section, having a central substantially linear portion, and an upturned terminal portion at at least one end thereof.

In a typical embodiment of the invention the linear portion of the guide will be substantially parallel with the axis of rotation of the roller, and the upturned terminal portion or portions will extend away from the axis of rotation of the roller.

In a preferred embodiment the slot or passage has upturned terminal portions at both ends thereof.

In one embodiment the slot or passage may be defined between the surface of the roller and a guide member which is attached to the roller. The guide member may be a metal wire member attached to the roller, the two free ends of the wire member being embedded in the roller.

Alternatively, in a preferred embodiment of the invention, the slot or passage may be in the form of a passage formed within the roller. Thus the passage is in the form of a "tunnel" passing through part of the roller.

Preferably the roller is biassed to the initial position by spring means, which may apply a force to a point on the roller, the line of the force making an angle of approximately 90° or less with the line joining said point on the roller to the axis of rotation of the roller when the roller is in the initial position. It has been found that when such an expedient is adopted a predetermined spring force maintains the roller in the initial position. However, when this predetermined force is overcome, the effective moment of the force reduces, and thus as the roller is moved away from the initial position the biassing force biassing the roller back to the initial position reduces. Of course, in an accident situation, as soon as the roller starts to move it is desirable for the roller to move as rapidly as possible to the clamping position.

In one embodiment of the invention the spring means comprise two extension springs, one located at each end of the roller, the springs being parallel. In such an embodiment the springs may be connected to the ends of a rod which passes through the roller, parallel to the axis of rotation thereof, but at a point spaced therefrom. However, the spring means may comprise a torsion spring between the roller and a support for the roller.

In order that the invention may be more readily understood, and so that further features thereof may be appreciated, the invention will now be described, by way of example, with reference to the accompanying drawings in which:

FIGURE 1 is a diagrammatic cross sectional view through part of a very simple embodiment of the invention,

FIGURES 2 and 3 are graphical figures illustrating the properties of the embodiment shown in Figure 1,

FIGURE 4 is a cross sectional view (taken on the line IV-IV of Figure 5) of a second embodiment of the invention,

FIGURE 5 is a front elevational view of the second embodiment of the invention,

FIGURE 6 is a sectional view, taken towards one side, of a third embodiment of the invention,

FIGURE 7 is a view illustrating the roller of the third embodiment of the invention, and

FIGURE 8 is a central sectional view through the embodiment shown in Figure 6 and 7.

FIGURE 9 is an exploded perspective view of another embodiment of the invention,

FIGURE 10 is a view of the roller of the embodiment of Figure 9,

FIGURE 11 is a elevational view, partly in section, taken on the line XI-XI of Figure 12, and

FIGURE 12 is a sectional view taken on the lines XII-XII of Figure 11.

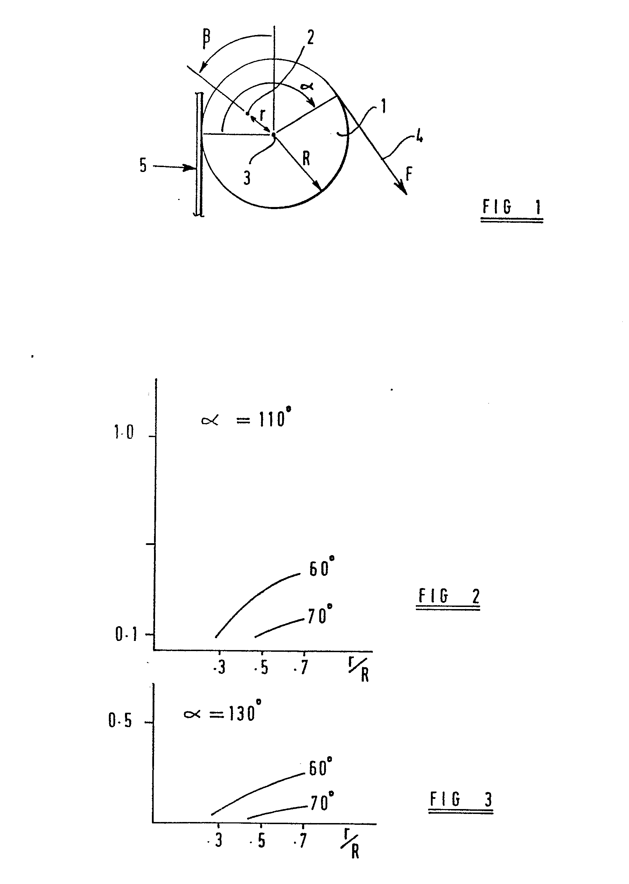

Referring initially to Figure 1 a cylindrical roller 1 is provided which is mounted for rotation about an axis 2 which is offset from the centre 3 of the cylindrical roller. The cylindrical roller 1 has a radius $\underline{R}$, and a distance between the centre of the roller 3 and the axis of rotation 2 is $\underline{r}$.

A seat belt 4 has part thereof wrapped around the roller 1, and the roller is mounted for rotation about the axis 2 in an appropriate support element. Only part 5 of the support element is shown, this part comprising a vertical surface located adjacent the roller. A considerable force F has been applied to the seat belt 4 causing the roller to rotate from an initial position about the axis 2 so that part of the periphery of the roller 1 is firmly clamping with the seat belt 4 against the vertical surface 5.

When in this condition the seat belt is wrapped around a predetermined portion of the periphery of the roller 1 indicated by the angle alpha. Also, when in this position, the angle between a vertical line extending upwardly from the centre 3 of the roller and a line passing through the centre 3 of the roller and the pivotal axis 2 thereof is beta.

Figures 2 and 3 plot the friction retaining the belt (when the assembly is in the clamped condition) against the ratio of r to R for different values of the angle alpha. In each case each graphical figure contains two lines relating to different values of the angle beta.

It can be seen that the friction provided is greater when the ratio r:R approaches unity, that is to say when the axis of rotation is located very close to the periphery of the roller, and also it can be seen that the friction is greatest when the angle beta is of the smaller value.

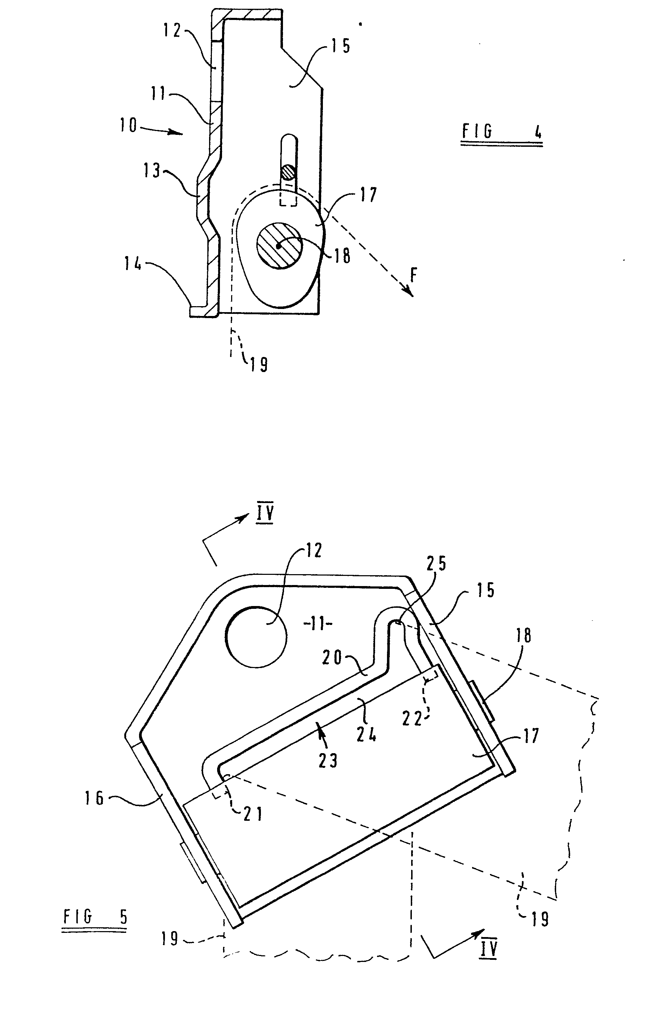

Turning now to Figures 4 and 5 one embodiment of the invention is illustrated. In this embodiment a support member 10 is provided. The support member has a substantially flat base portion 11 provided with a through going aperture 12 to accommodate a bolt or the like to enable the support member 10 to be bolted in position, for example on the "B" post of a motor vehicle. The flat portion 11 is provided with a rearwardly extending depression 13 and a lower rearwardly extending lip 14 to assist in locating the support member 10 in an appropriate position.

The support member 10 has two forwardly extending side walls 15, 16.

A roller 17 is mounted in position between the side walls on an axle 18 which passes through coaligned apertures formed in the side wall 16, 17. As can be seen most clearly from Figure 4 the roller is an eccentric roller, in that the roller is not circular. The roller can occupy an initial position as illustrated in Figure 17 when the roller is spaced from the planar portion 11 of the support member 10. A seat belt 19 can be passed up between the planar portion 11 of the support member 10, and over the roller 17. It will be appreciated that when a force F is applied to the seat belt in the direction of the arrow present in Figure 4, if the force exceeds a predetermined force the roller will rotate, and the eccentric nature of the roller is such that part of the roller will then trap or clamp part of the seat belt 19 firmly against the planar portion 11 of the support member 10.

To prevent the seat belt being dragged to one side of the roller and bunching the seat belt passes through a guide provided on the roller. In this embodiment the guide is constituted by a guide element 20 formed of a length of wire, the free ends 21, 22 of the wire being embedded in the roller. The wire is bent or otherwise configured to define a slot 23 which has a linear portion 24 extending substantially parallel with the axis of rotation of the roller 17 and a terminal upwardly extending portion 25 which extends angularly and radially away from the axis of rotation of the roller 17. The seat belt is illustrated passing through the slot 24, and the provision of a guide of this type minimises any bunching of the seat belt.

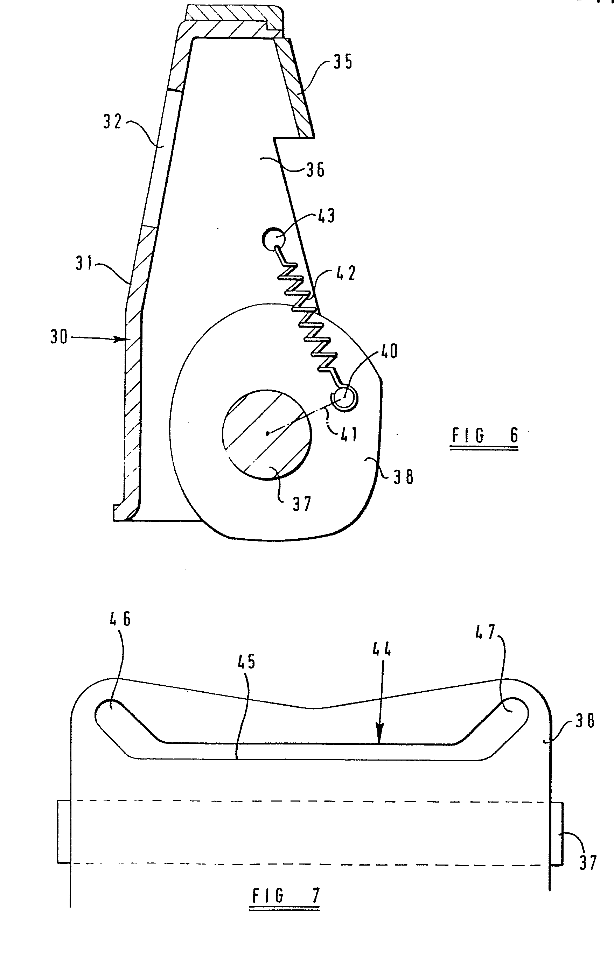

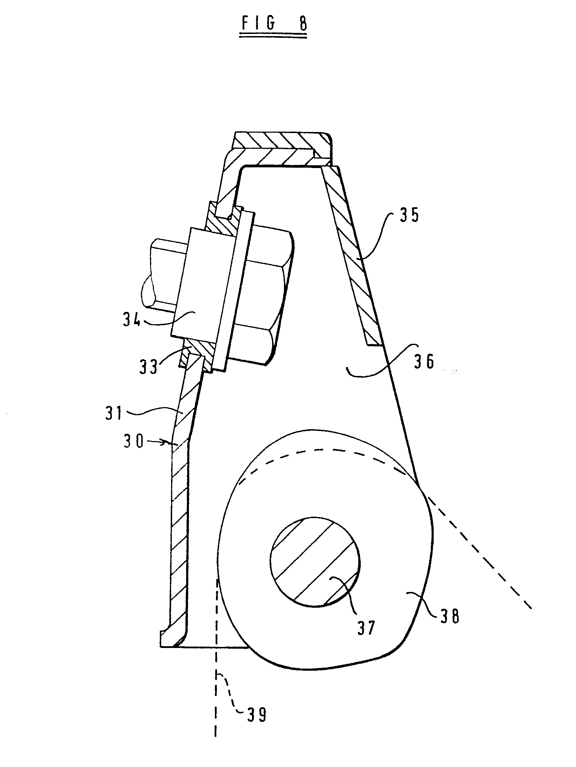

Figures 6 to 8 illustrate another embodiment of the invention. In this embodiment of the invention a support member 30 is provided which has a generally planar rear wall 31 defining an aperture 32 which, as shown in Figure 8, can receive a gromet 33 which forms a seat for a bolt 34 which can mount the support member 30 in position, for example on the "B" post of a motor vehicle.

A cover member 35 is releasably connected to the base member. The base member has forwardly extending side walls 36 which rotatably support, about an axle 37, an eccentric roller 38. As in the previously described embodiment a seat belt 39 may pass upwardly between the roller and a part of the support member, so that when a force is applied thereto the roller will rotate and will clamp the seat belt 39 against the support member.

As shown in Figure 6 the roller 38 is provided with a rod 40 passing therethrough. The rod 40 is parallel with the axis of rotation of the roller 38, but is spaced therefrom. A notional line 41 connects the axis of the rod 40 and the axis of rotation of the roller 38. Respective springs 42 are connected to the ends of the rod and are also connected to apertures 43 formed in the side walls 36 of the support member.

It is to be observed that the spring is a linear extension spring and thus applies a substantially linear force to the rod 40. This force is applied at an angle of approximately $90^{o}$ to the notional line 41. When a seat belt is wrapped around the roller 38 and a significant force is applied to the seat belt, the seat belt will overcome the biassing force provided by the spring 42, and the roller 38 will then begin to rotate in a clockwise direction as seen in Figure 6. As the roller rotates in a clockwise direction the angle between the spring 42 and the line 41 will reduce and thus the effective moment provided by the spring will also reduce. Thus, once the initial biassing force has been overcome the roller will rotate more freely.

As can been seen in Figure 7 the roller 38 is provided with a passage 44 that is formed within the roller. The passage is thus in the form of a tunnel that extends through the roller. The passage has a central linear portion 45 which extends substantially parallel with the axis of rotation of the roller, and two upwardly extending terminal portions 46, 47. The upwardly extending terminal portions are directed upwardly and away from the axis of rotation of the roller 38.

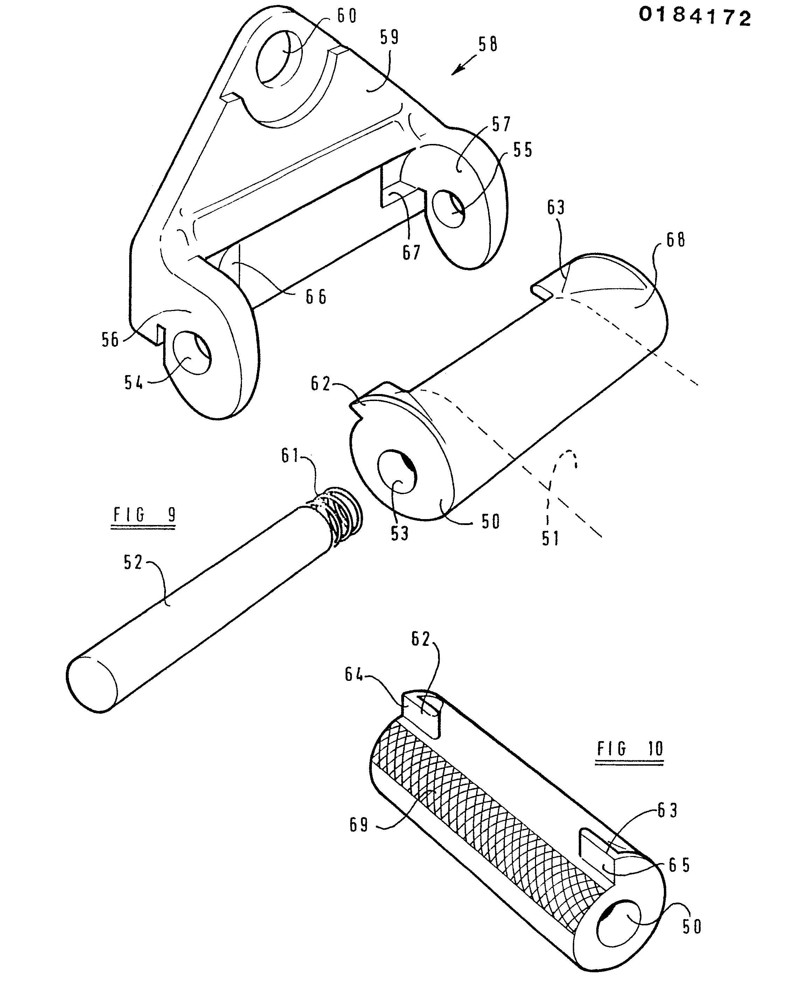

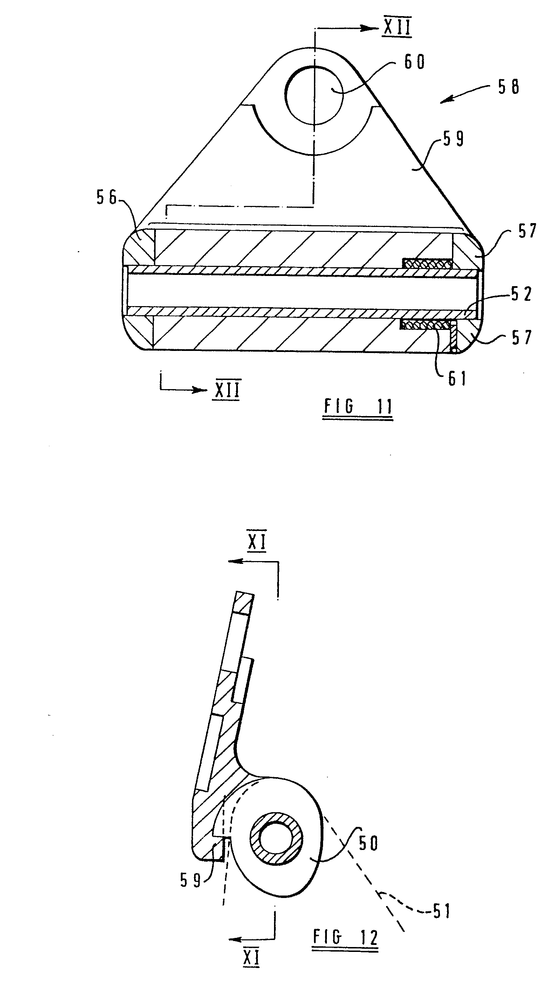

Referring now to Figure 9, a further embodiment of the invention incorporates a generally cylindrical roller 50 which, as can be seen most clearly from Figure 12, does not have a circular cross section but instead has a substantially oval cross section. A seat belt 51 may have part thereof wrapped around the roller 50. The roller is mounted for rotation by means of a tubular axle 52 which passes through an axial bore 53 formed in the roller, the ends of the axle 52 being received in apertures 54, 55 formed in forwardly extending lugs 56, 57 present on a support element 58 which incorporates a substantially triangular plate 59 provided with an aperture 60 adapted to receive a bolt to enable the support element 58 to be mounted on the "B" post of a motor vehicle.

As can be seen most clearly in Figures 9 and 11 a helical torsion spring 61 is provided which surrounds part of the axle 52, and which engages the protruding lug 57 and also engages the roller 50. The spring serves to retain the roller 50 in the relative rotational position illustrated in Figures 9 and 12.

It will be observed that the roller 50 is provided, at opposed ends thereof, with two radially projecting lugs 62, 63. The lugs effectively define radially extending abutments 64, 65 and it can be seen that the lower part of the triangular plate 59 defines recesses which are dimensioned and located to receive the projecting lugs 62, 63 with the radial abutments 64, 65 in contact with part of the support plate 59, thus serving to prevent further rotation of the roller 50 under the bias imparted thereto by the spring 61.

It can be seen that a part of the roller 50 that is uppermost when the roller is in the initial position of Figures 9 and 12, that is to say the part of the roller identified by the reference numeral 68 is relatively smooth, whereas part of the roller, identified by the reference numeral 69, located adjacent the projections 62, 63, has a knurled configuration.

The seat belt 39 is threaded through the passage 44 and is thus guided by the passage. The configuration of the passage prevents any "bunching" of the seat belt within the described assembly.

In use of the roller shown in Figures 9 to 12 initially the roller 50 is in the position illustrated in Figure 12, and the seat belt thus passes over the smooth upper part of the roller. When only a low force is applied to the seat belt, the seat belt will thus slide over this smooth portion of the roller. However, if a significant force is applied to the seat belt, the roller will rotate, in a clockwise direction as shown in Figure 12, and the knurled portion 69 of the roller will then engage the seat belt, the knurled portion of the roller 69 pressing the seat belt against the flat part of the support element 58 between the recesses 66, 67. The knurled part 69 of the roller 50 grips the seat belt firmly to prevent any further amount of seat belt being paid out.

It is preferred that only the roller should be knurled since if the support is also knurled it is possible for the seat belt to be damaged.

Whilst various embodiments of the invention have been described, it is to be understood that the description is given merely by way of example and many modifications may be made without departing from the scope of the invention.

CLAIMS:

1.     A seat belt guide assembly comprising a support member (5, 58), means to mount the support member in position on a vehicle, a roller (1, 50) carried by the support member, the roller being eccentric, the arrangement being such that a seat belt (4, 51) may be wrapped partly round the roller with the roller in an initial position with part of the seat belt located between the roller and part of the support member, the roller rotating when a predetermined force is applied to the belt, the eccentric nature of the roller being such that part of the belt is then clamped between the roller and the support member when the roller thus rotates.

2.     A seat belt guide assembly according to claim 1 wherein the part of the roller (31) that clampingly engages said belt is knurled (59) or roughened.

3.     A seat belt guide assembly comprising a support member (11), means to mount the support member in position on a vehicle, a roller (17, 38) carried by the support member, the roller being eccentric, the arrangement being such that a seat belt (19) may be wrapped partly round the roller with the roller in an initial position with part of the seat belt located between the roller and part of the support member, the roller rotating when a predetermined force is applied to the belt, the eccentric nature of the roller being such that part of the belt is clamped between the roller and the support member when the roller thus rotates, wherein a guide (23, 44) for restraining the belt is provided on the roller.

4.     A seat belt guide assembly according to claim 3 wherein the guide defines a slot or passage (23 44), to accommodate the belt, the slot or passage in cross section, having a central substantially linear portion, and an upturned terminal portion (25, 46, 47) at least one end thereof.

5.     A seat belt guide assembly according to claim 4 wherein the slot or passage (24) is defined between the surface of the roller and a guide member (20) attached to the roller.

6.     A seat belt guide assembly according to claim 4 wherein the slot or passage (44) is in the form of a passage formed within the roller.

7. A seat belt guide assembly according to any one of the preceding claims wherein the roller is biassed to the initial position by spring means (42, 61).

8. A seat belt guide assembly according to claim 7 wherein the spring means (42) apply a force to a point on the roller, the line of the force making an angle of approximately $90^\circ$ or less with the line (41) joining said point on the roller to the axis of rotation of the roller when the roller is in the initial position.

9. A seat belt guide assembly according to claim 8 wherein said spring means (42) comprise two extension springs, one located at each end of the roller, the springs being parallel.

10. A seat belt guide assembly according to claim 9 wherein said springs are connected to the ends of a rod (40) which passes through the roller parallel to the axis of rotation thereof, but at a point spaced therefrom.

b

1/6

0184172

FIG 1

FIG 2

FIG 3

FIG 4

FIG 5

0184172

FIG 6

FIG 7

FIG 8

35

34

33

31

30

36

37

38

39

FIG 9

FIG 10

0184172

FIG 11

FIG 12